# EUROPÄISCHE PATENTANMELDUNG

(11) **EP 4 528 085 A1**
(43) Veröffentlichungstag der Anmeldung: **26.03.2025**
(21) Anmeldenummer: 24194037.8
(22) Anmeldetag: 12.08.2024
(51) Int. Cl.: F01N 3/20, F01N 9/00, F01N 13/00, F02D 41/00, F02D 41/14, F01N 3/10, F02M 21/02

(54) **ABGASNACHBEHANDLUNG FÜR EINE BRENNKRAFTMASCHINE**

(30) Priorität: 25.09.2023 DE 102023125849
(71) Anmelder: Innio Jenbacher GmbH & Co OG, 6200 Jenbach (AT)
(72) Erfinder: SEPULVEDA LOPEZ, David, 6020 Innsbruck (AT); URL, Michael, 85375 Neufahrn (DE)
(74) Vertreter: Torggler & Hofmann Patentanwälte - Innsbruck

(57) **Zusammenfassung**

Stationäre Brennkraftmaschine, mit:
- einer Vielzahl (1) von Kolben-Zylinder-Einheiten, welche dazu ausgebildet sind, Kraftstoff zu verbrennen, welcher Ammoniak und/oder Wasserstoff beinhaltet oder aus Ammoniak und/oder Wasserstoff besteht
- einem Abgastrakt (5), welcher mit der Vielzahl von Kolben-Zylinder-Einheiten verbunden ist
- einer Abgasnachbehandlungsanlage (7), welche mit dem Abgastrakt (5) verbunden ist
- einer Motorsteuerung (12) zum Steuern oder Regeln der Vielzahl (1) von Kolben-Zylinder-Einheiten und/oder der Abgasnachbehandlungsanlage (7)
wobei
- die Abgasnachbehandlungsanlage (7) wenigstens einen ersten SCR-Katalysator (4) umfasst, welcher einen mit dem Abgastrakt (5) verbundenen Einlass aufweist
- die Motorsteuerung (12) dazu konfiguriert ist, die Vielzahl (1) von Kolben-Zylinder-Einheiten und/oder die Abgasnachbehandlungsanlage (7) derart zu steuern oder zu regeln, dass sich im Einlass des wenigstens einen ersten SCR-Katalysators (4) ein vorgegebenes Verhältnis von Ammoniak zu NOₓ (ANR) vorzugsweise zwischen 0,95 und 1,05 vergibt. Es kann vorzugsweise ein zweiter SCR (8), ein ASC (10) und zumindest eine Dosiervorrichtung (11) für Reduktionsmittel vorgesehen werden.

## Beschreibung

Die Erfindung betrifft eine stationäre Brennkraftmaschine, welche mit einem Kraftstoff betrieben wird, welcher Ammoniak (NH₃) und/oder Wasserstoff (H₂) beinhaltet oder aus diesem besteht, mit den Merkmalen des Oberbegriffs des Anspruchs 1 und ein Genset mit einer solchen Brennkraftmaschine.

Problematisch ist, dass bei Verwendung von Ammoniak oder Wasserstoff als Kraftstoff oder Ammoniak- oder Wasserstoff-basierten Kraftstoffen die Emissionen an NH₃, NOₓ und N₂O weit höher sind als bei bekannten Brennkraftmaschinen, welche z. B. mit Erdgas betrieben werden (z. B. bei NOₓ um das Dreißigfache, und hohe Werte von N₂O und NH₃, welche bei Erdgas-betriebenen Brennkraftmaschinen nicht im Abgas vorkommen).

Für Straßenfahrzeuge ist aus DE 11 2006 003 231 T5 eine Brennkraftmaschine bekannt, bei welcher NOₓ-Emissionen mit Hilfe von Ammoniak in einer Abgasnachbehandlungsanlage reduziert werden. Die Anforderungen an eine in einem Straßenfahrzeug angeordnete Brennkraftmaschine und eine Ammoniak oder Wasserstoff verbrennende, stationäre Brennkraftmaschine, die bevorzugt zur Erzeugung elektrischer Energie dient, unterscheiden sich massiv.

Es besteht die Notwendigkeit, bei gattungsgemäßen stationären Brennkraftmaschinen und einem Genset mit einer solchen stationären Brennkraftmaschine eine effiziente Abgasnachbehandlung vorzunehmen.

Es ist eine Aufgabe der Erfindung, eine gattungsgemäße stationäre Brennkraftmaschine und ein Genset mit einer derartigen stationären Brennkraftmaschine derart weiterzubilden, dass eine effiziente Abgasnachbehandlung, insbesondere auch für verschiedene Betriebszustände der stationären Brennkraftmaschine, ermöglicht wird.

Diese Aufgabe wird gelöst durch eine stationäre Brennkraftmaschine mit den Merkmalen des Anspruchs 1 und ein Genset mit einer solchen stationären Brennkraftmaschine.

Eine solche stationäre Brennkraftmaschine umfasst:
- eine Vielzahl von Kolben-Zylinder-Einheiten, welche dazu ausgebildet sind, Kraftstoff zu verbrennen, welcher Ammoniak und/oder Wasserstoff beinhaltet oder aus Ammoniak und/oder Wasserstoff besteht
- einen Abgastrakt, welcher mit der Vielzahl von Kolben-Zylinder-Einheiten verbunden ist
- eine Abgasnachbehandlungsanlage, welche wenigstens einen ersten SCR-Katalysator umfasst, welcher einen mit dem Abgastrakt verbundenen Einlass und einen Auslass aufweist
- eine Motorsteuerung, welche dazu konfiguriert ist, nach Erreichen einer vorgegebenen Abgastemperatur im Abgastrakt die Vielzahl von Kolben-Zylinder-Einheiten und/oder die Abgasnachbehandlungsanlage derart zu steuern oder zu regeln, dass sich vor dem Auslass der Abgasnachbehandlungsanlage, bevorzugt im Einlass des wenigstens einen ersten SCR-Katalysators und besonders bevorzugt auch im Einlass eines dem wenigstens einen ersten SCR-Katalysator nachgeschaltenen zweiten SCR-Katalysators, ein vorgegebenes Verhältnis von Ammoniak zu NOₓ ergibt

Das Verhältnis von Ammoniak zu NOₓ wird auch als ANR bezeichnet.

Bevorzugt ist ein Verhältnis ANR in einem Bereich von etwa 0,95 bis etwa 1,05, besonders bevorzugt von etwa 1, vorgegeben.

Bevorzugt liegt die vorgegebene Abgastemperatur nach Erreichen eines Dauerbetriebs der Brennkraftmaschine, d. h. nachdem der Startvorgang abgeschlossen ist, bei etwa 400 °C, ganz bevorzugt bei etwa 500 °C.

Unter einem SCR-Katalysator wird ein Katalysator verstanden, welcher nach dem Prinzip der selektiven katalytischen Reduktion funktioniert.

Unter einem ASC-Katalysator wird ein Ammoniakschlupf-Katalysator verstanden.

Bei einer derartigen stationären Brennkraftmaschine ist eine deutliche Reduktion der Emissionen an NH₃, NOₓ und N₂O erzielbar. Beispielsweise können in einem Temperaturbereich, welcher einem Dauerbetrieb der Brennkraftmaschine entspricht (etwa 400 °C bis etwa 550 °C) durch den ersten SCR-Katalysator Umsätze (engl. "conversion efficiencies") von mehr als 90 % für NH₃, NOₓ erzielt werden.

Durch den Einsatz eines zweiten SCR-Katalysators können im Dauerbetrieb Umsätze für N₂O von mehr als 70 % erzielt werden. In Kombination können beide SCR-Katalysatoren Umsätze von mehr als 98 % für NH₃, NOₓ und mehr als 80 % für N₂O erzielen.

Die Steuerung oder Regelung der Vielzahl von Kolben-Zylinder-Einheiten durch die Motorsteuerung kann durch an sich bekannte Maßnahmen erfolgen, wie Wahl des Zündzeitpunkts, Wahl eines Luftüberschusses des Kraftstoff-Luft-Gemisches oder Volumprozent der Beimengung von H₂, oder eine Kombination aus zwei oder mehrerer solcher Maßnahmen. Diese Steuerung oder Regelung kann derart erfolgen, dass sich ein gewünschtes Verhältnis von NH₃ zu NOₓ einstellt.

Die Steuerung oder Regelung der Vielzahl von Kolben-Zylinder-Einheiten durch die Motorsteuerung kann durch Zudosierung von NH₃ mittels wenigstens einer Dosiervorrichtung erfolgen.

Es kann eine Kombination aus Maßnahmen der beiden vorangehenden Absätze vorgesehen sein.

Vorteilhafte Ausführungsformen der Erfindung sind in den abhängigen Ansprüchen definiert.

Bevorzugt wird als Kraftstoff NH₃, H₂ oder eine Mischung aus NH₃ und H₂ eingesetzt. Die Schadstoffe im Abgas setzen sich dann hauptsächlich aus NH₃, NOₓ und N₂O zusammen. Daneben weist das Abgas noch H₂O, N₂ und O₂ auf.

Bei einer Ausführungsform ist vorgesehen, dass die Abgasnachbehandlungsanlage wenigstens einen, dem ersten SCR-Katalysator nachgeschaltenen ASC-Katalysator umfasst.

Bei einer Ausführungsform ist vorgesehen, dass zwischen dem ersten SCR-Katalysator und dem ASC-Katalysator ein zweiter SCR-Katalysator angeordnet ist, wobei bevorzugt vorgesehen ist, dass der zweite SCR-Katalysator als Eisen-Zeolith-SCR-Katalysator ausgebildet ist.

Ist ein zweiter SCR-Katalysator vorgesehen, kann die Motorsteuerung, dazu konfiguriert sein, nach Erreichen der vorgegebenen Abgastemperatur im Abgastrakt die Vielzahl von Kolben-Zylinder-Einheiten und/oder die Abgasnachbehandlungsanlage derart zu steuern oder zu regeln, dass sich auch im Einlass des zweiten SCR-Katalysators, ein vorgegebenes Verhältnis von Ammoniak zu NOx ergibt

Bei einer Ausführungsform ist vorgesehen, dass der erste SCR-Katalysator als Kupfer-Zeolith-SCR-Katalysator ausgebildet ist.

Für den Fall, dass mehr als ein Katalysator vorgesehen ist, können die Katalysatoren in einem gemeinsamen Gehäuse oder in separaten Gehäusen angeordnet sein.

Bei einer Ausführungsform ist eine Messvorrichtung vorgesehen, welche dazu ausgebildet ist, Daten zu Motorparametern der Brennkraftmaschine und/oder Daten zum Betriebszustand der Abgasnachbehandlungsanlage und/oder Daten zum Abgas der Brennkraftmaschine an die Motorsteuerung zu melden. Alternativ oder in Kombination kann vorgesehen sein, dass die Motorsteuerung dazu ausgebildet ist, diese Daten anhand von hinterlegten Modellen zu berechnen. Die Steuerung oder Regelung durch die Motorsteuerung kann anhand der gemessenen und/oder der berechneten Daten vorgenommen werden.

Bei einer Ausführungsform ist vorgesehen, dass die Abgasnachbehandlungsanlage dazu ausgebildet ist, während eines Kaltstarts der Brennkraftmaschine Ammoniak zu speichern.

Bei einer Ausführungsform ist vorgesehen, dass die Motorsteuerung dazu konfiguriert ist, die Abgasnachbehandlungsanlage derart zu steuern, dass in einem ersten Temperaturbereich (beispielsweise ein Temperaturbereich von etwa 0 °C bis etwa 300 °C) des Abgases im Abgastrakt eine Speicherung von Ammoniak erfolgt. Dies ist besonders relevant bei einem Kaltstart der Brennkraftmaschine.

Dabei kann vorgesehen sein, dass die Motorsteuerung dazu konfiguriert ist, die Abgasnachbehandlungsanlage derart zu steuern, dass in einem zweiten Temperaturbereich (beispielsweise ein Temperaturbereich von etwa 400 °C bis etwa 550 °C) des Abgases im Abgastrakt, welcher höher gelegen ist als der erste Temperaturbereich, eine Konversion von NH₃, NOₓ und N₂O erfolgt. Bevorzugt entspricht der untere Grenzwert des zweiten Temperaturbereichs der vorgegebenen Abgastemperatur.

Bei einer Ausführungsform ist vorgesehen, dass die Abgasnachbehandlungsanlage eine Dosiervorrichtung zur Zudosierung eines Reduktionsmittels, insbesondere von Ammoniak, in das Abgas aufweist. Dies kann erforderlich sein, wenn die auf die Kolben-Zylinder-Einheiten gerichteten Maßnahmen an ihre Grenzen kommen oder weit weg vom Wirkungsgradoptimum liegen, um dennoch ein ideales Verhältnis ANR einzustellen.

Ausführungsformen der Erfindung werden anhand der Figuren diskutiert.
Figur 1 zeigt eine schematische Darstellung einer erfindungsgemäßen Brennkraftmaschine.
Figur 2 zeigt Zusammenhänge zwischen Verhältnis ANR und Wahl eines Zündzeitpunkts ITP für verschiedene Anteile an H₂ im Kraftstoff.
Figur 3 zeigt Zusammenhänge zwischen Verhältnis ANR und Luftüberschuss EAR für verschiedene Anteile an H₂ im Kraftstoff.
Figur 4 zeigt Umsätze für NH₃, NOₓ und N₂O in Abhängigkeit des Verhältnisses ANR.
Figur 5 zeigt weitere Zusammenhänge zwischen Verhältnis ANR und Änderung Δ des Luftüberschusses EAR.

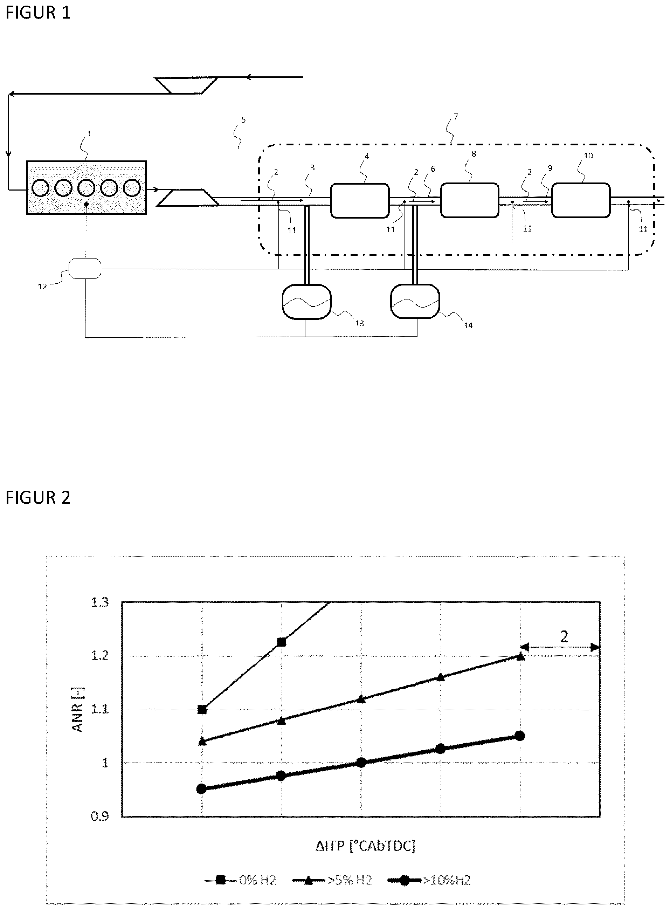

Die in Figur 1 gezeigte stationäre Brennkraftmaschine weist auf:
- eine Vielzahl 1 von Kolben-Zylinder-Einheiten, welche dazu ausgebildet sind, Kraftstoff zu verbrennen, welcher Ammoniak und/oder Wasserstoff beinhaltet oder aus Ammoniak und/oder Wasserstoff besteht
- einen Abgastrakt 5, welcher mit der Vielzahl von Kolben-Zylinder-Einheiten verbunden ist
- eine Abgasnachbehandlungsanlage 7, welche mit dem Abgastrakt 5 verbunden ist, und aufweist:
   - einen ersten SCR-Katalysator 4, welcher einen mit dem Abgastrakt 5 über einen ersten Abschnitt 3 der Abgasleitung verbundenen Einlass aufweist
   - einen zweiten SCR-Katalysator 5, welcher über einen zweiten Abschnitt 6 der Abgasleitung mit dem ersten SCR-Katalysator 4 verbunden ist
   - einen ASC-Katalysator 10, welcher einerseits über einen dritten Abschnitt 9 mit dem zweiten SCR-Katalysator 5 und andererseits mit einem Auslass der Brennkraftmaschine verbunden ist
- eine Motorsteuerung 12 zum Steuern oder Regeln der Vielzahl 1 von Kolben-Zylinder-Einheiten und/oder der Abgasnachbehandlungsanlage 7, die dazu konfiguriert ist, die Vielzahl 1 von Kolben-Zylinder-Einheiten und/oder die Abgasnachbehandlungsanlage 7 derart zu steuern oder zu regeln, dass sich im Einlass des wenigstens einen ersten SCR-Katalysators 4 ein vorgegebenes Verhältnis ANR von Ammoniak zu NOₓ ergibt
- Messvorrichtungen 11, welche Daten der Vielzahl 1 von Kolben-Zylinder-Einheiten und Daten zum Abgas 2 an unterschiedlichen Stellen der Abgasnachbehandlungsanlage 7 an die Motorsteuerung 12 liefern (nicht dargestellt sind optionale Messvorrichtungen 11, welche Daten zum Betriebszustand der Abgasnachbehandlungsanlage 7 wie z. B. Temperaturen der Katalysatoren an die Motorsteuerung 12 liefern)
- Dosiervorrichtungen 13, 14 zur Zudosierung von Ammoniak in das Abgas 2; wie dargestellt, können diese an allen gezeigten Stellen der Abgasnachbehandlungsanlage 7 vorgesehen sein oder nur an einzelnen der dargestellten Stellen

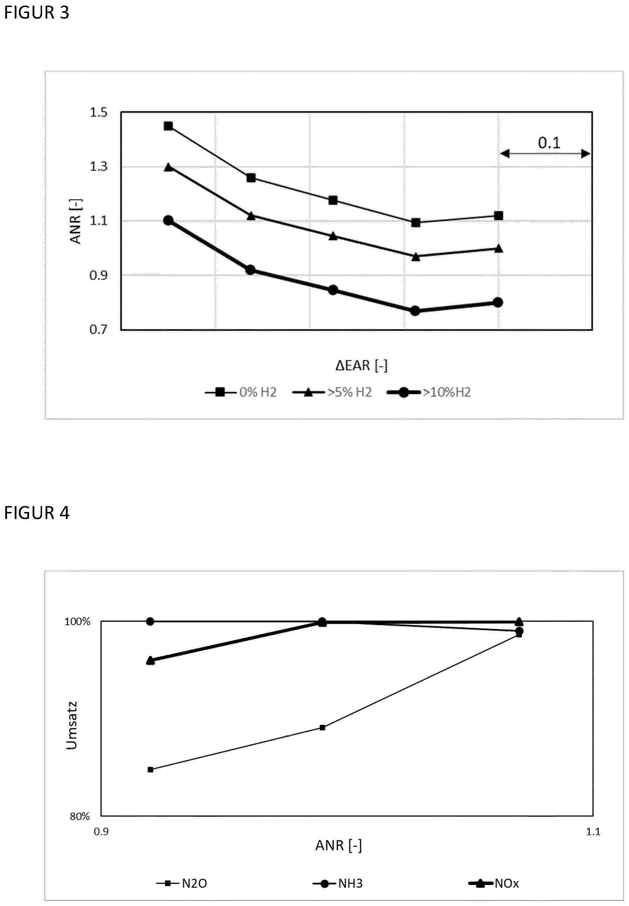

Die Figuren 2 und 3 zeigen, wie durch Wahl des Arbeitspunktes der Vielzahl von Kolben-Zylinder-Einheiten (Figur 2: Änderung Δ des Zündzeitpunktes ITP in Kurbelwellenwinkel vor oberem Totpunkt, Figur 3: Änderung Δ des Luftüberschusses EAR - ein Luftüberschuss EAR von Eins entspricht einem stöchiometrischen Verhältnis von Kraftstoff und Luft) ein gewünschtes Verhältnis ANR eingestellt werden kann.

Figur 4 zeigt, wie durch Einsatz eines ersten und eines zweiten SCR-Katalysators 4, 8 bei einem Verhältnis ANR nahe bei Eins hohe Konversioneffizienzen für NH₃, NOₓ und N₂O erzielt werden können. Falls ein niedrigeres Verhältnis ANR gewählt wird, ergeben sich niedrigere Umsätze für NH₃ und N₂O. Durch Wahl eines höheren Verhältnisses ANR ergibt sich ein niedrigerer Umsatz für NH₃.

Als erstes Beispiel, für den Fall, dass Umsätze größer als 95 % für NH₃ und NOₓ und größer als 70 % für N₂O erforderlich sind, kann ein Verhältnis ANR größer als 0,97 angestrebt werden (bei einer Abgastemperatur größer als 500 °C).

Als zweites Beispiel, für den Fall, dass Umsätze größer als 99,5 % für NH₃ und NOₓ und größer als 80 % für N₂O erforderlich sind, kann ein Verhältnis ANR von etwa Eins angestrebt werden (bei einer Abgastemperatur größer als 500 °C).

Um in den beiden vorangehenden Beispielen das gewünschte Verhältnis ANR einzustellen, würde die Motorsteuerung 13 die Parameter der Kolben-Zylinder-Einheiten einstellen. Die Wahl der gewünschten Parameter kann durch eine multivariable Optimierung erfolgen (z. B. in Abhängigkeit von Maschinenwirkungsgrad, Maschinenlast, Abgastemperatur, NH₃ Verbrauch usw.).

Ein genaueres Verhältnis ANR kann in Abhängigkeit der Eigenschaften der Abgasnachbehandlungsanlage 7 wie Raumgeschwindigkeiten, Katalysatoreigenschaften, usw. bestimmt werden.

Im Falle eines Starts der Brennkraftmaschine (Kaltstart oder Warmstart) beeinflussen zwei Faktoren die Performance der Abgasnachbehandlungsanlage 7:
- Möglichkeit NH₃ zu speichern. Die erzielbare Speichermenge hängt vom absoluten Betrag von NH₃ im Abgas 2, der Temperatur des Abgases 2 und den Eigenschaften der Abgasnachbehandlungsanlage 7 ab.
- Die Umwandlung von NH₃ und NOₓ hängt von Eigenschaften der Abgasnachbehandlungsanlage 7, derTemperatur des Abgases 2 und dem Abgas 2 ab.

Die Speicherung von NH₃ erfolgt bei niedrigeren Temperaturen, dann beginnt die Umwandlung von NH₃ und NOₓ.

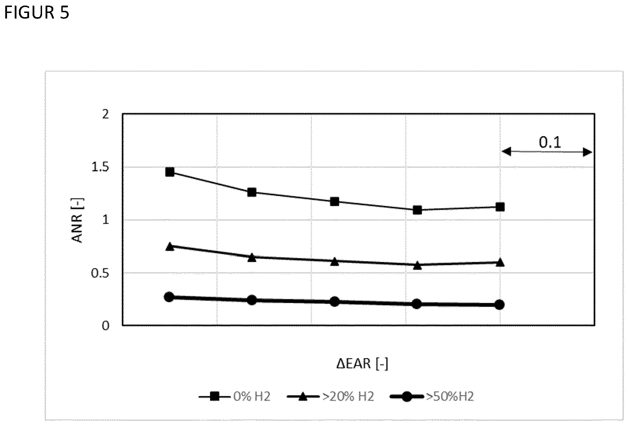

Während des Starts der Brennkraftmaschine kann eine Optimierung der Umwandlung basierend auf dem Verhältnis ANR erfolgen, mit niedrigerem oder höherem Verhältnis ANR im Abgas 2 beim Einlass des ersten SCR-Katalysators 4, abhängig von der Phase des Starts. Große Veränderungen des Verhältnisses ANR können durch Beeinflussung von Parametern der Kolben-Zylinder-Einheiten erzielt werden. Ein solches Beispiel ist in Figur 5 dargestellt, wo durch Änderung des Luftüberschusses EAR und des Wasserstoff-Volumenanteils im Kraftstoff Verhältnisse ANR von 0,3 bis 1,4 erzielt werden.

Alternativ oder zusätzlich zur Beeinflussung der Parameter der Kolben-Zylinder-Einheiten kann generell zur Beeinflussung des Verhältnisses ANR eine durch die Motorsteuerung 13 gesteuerte oder geregelt Zudosierung von Ammoniak oder Ammoniak-basierten Reduktionsmitteln wie Harnsäure erfolgen. Das Reduktionsmittel kann extern in flüssiger oder gasförmiger Form gespeichert oder aus einer Kraftstoffleitung oder einem Kraftstofftank entnommen werden. Die Zudosierung des Reduktionsmittels kann vor dem ersten SCR-Katalysator 4 und/oder vor dem zweiten SCR-Katalysator 8 erfolgen.

Es kann eine Steuer- oder Regelstrategie gewählt werden, bei welcher durch die Motorsteuerung 13 sowohl die Parameter der Kolben-Zylinder-Einheiten beeinflusst werden als auch ein Reduktionsmittel zudosiert wird, so wie in den vorangehenden Absätzen beschrieben. Die Aufteilung kann durch eine multivariable Optimierung erfolgen.

Eine Einstellung des Verhältnisses ANR kann nach Erreichen des Dauerbetriebs (z. B. ab einer vorbestimmten Temperatur des Abgases 2) im Hinblick auf eine Optimierung der Konversion von NH₃, NOₓ und N₂O erfolgen. Während des Starts der Brennkraftmaschine (besonders bei niedrigen Temperaturen des Abgases 2) kann die Optimierung im Hinblick auf die Speicherfähigkeit für Ammoniak und die Konversion von NH₃ und NOₓ erfolgen.

### Bezugszeichenliste:

- 1: Vielzahl von Kolben-Zylinder-Einheiten
- 2: Abgas
- 3: erster Abschnitt der Abgasleitung
- 4: erster SCR-Katalysator
- 5: Abgastrakt
- 6: zweiter Abschnitt der Abgasleitung
- 7: Abgasnachbehandlungsanlage
- 8: zweiter SCR-Katalysator
- 9: dritter Abschnitt der Abgasleitung
- 10: ASC-Katalysator
- 11: Messvorrichtung
- 12: Motorsteuerung
- 13: Dosiervorrichtung zur Zudosierung von Ammoniak
- 14: Dosiervorrichtung zur Zudosierung von Ammoniak

- ANR: Verhältnis von NH₃ zu NOₓ
- EAR: Luftüberschuss im Gemisch aus Kraftstoff und Luft
- ITP: Einstellung des Zündzeitpunktes
- Δ: Änderung

## Patentansprüche

1. Stationäre Brennkraftmaschine, mit:
- einer Vielzahl (1) von Kolben-Zylinder-Einheiten, welche dazu ausgebildet sind, Kraftstoff zu verbrennen, welcher Ammoniak und/oder Wasserstoff beinhaltet oder aus Ammoniak und/oder Wasserstoff besteht
- einem Abgastrakt (5), welcher mit der Vielzahl von Kolben-Zylinder-Einheiten verbunden ist
- einer Motorsteuerung (12)
**dadurch gekennzeichnet, dass**
- eine Abgasnachbehandlungsanlage (7) vorgesehen ist, welche wenigstens einen ersten SCR-Katalysator (4) umfasst, welcher einen mit dem Abgastrakt (5) verbundenen Einlass aufweist
- die Motorsteuerung (12) dazu konfiguriert ist, die Vielzahl (1) von Kolben-Zylinder-Einheiten und/oder die Abgasnachbehandlungsanlage (7) nach Erreichen einer vorgegebenen Abgastemperatur im Abgastrakt (5) derart zu steuern oder zu regeln, dass sich vor dem Auslass der Abgasnachbehandlungsanlage (7), bevorzugt im Einlass des wenigstens einen ersten SCR-Katalysators (4), ein vorgegebenes Verhältnis (ANR) von Ammoniak zu NOₓ ergibt, bevorzugt ein Verhältnis (ANR) in einem Bereich von etwa 0,95 bis etwa 1,05.

2. Brennkraftmaschine nach dem vorangehenden Anspruch, wobei die Abgasnachbehandlungsanlage (7) wenigstens einen, dem ersten SCR-Katalysator (4) nachgeschaltenen ASC-Katalysator (10) umfasst.

3. Brennkraftmaschine nach dem vorangehenden Anspruch, wobei zwischen dem ersten SCR-Katalysator (4) und dem ASC-Katalysator (10) ein zweiter SCR-Katalysator (8) angeordnet ist, wobei bevorzugt vorgesehen ist, dass der zweite SCR-Katalysator (8) als Eisen-Zeolith-SCR-Katalysator ausgebildet ist.

4. Brennkraftmaschine nach wenigstens einem der vorangehenden Ansprüche, wobei der erste SCR-Katalysator (4) als Kupfer-Zeolith-SCR-Katalysator ausgebildet ist.

5. Brennkraftmaschine nach wenigstens einem der vorangehenden Ansprüche, wobei wenigstens eine Messvorrichtung (11) vorgesehen ist, welche dazu ausgebildet ist, Daten zu Motorparametern der Brennkraftmaschine und/oder Daten zum Betriebszustand der Abgasnachbehandlungsanlage (7) und/oder Daten zum Abgas (2) der Brennkraftmaschine an die Motorsteuerung (12) zu melden.

6. Brennkraftmaschine nach wenigstens einem der vorangehenden Ansprüche, wobei die Abgasnachbehandlungsanlage (7) dazu ausgebildet ist, während eines Starts, insbesondere Kaltstarts, der Brennkraftmaschine Ammoniak zu speichern.

7. Brennkraftmaschine nach wenigstens einem der vorangehenden Ansprüche, wobei die Motorsteuerung (12) dazu konfiguriert ist, die Abgasnachbehandlungsanlage (7) derart zu steuern, dass in einem ersten Temperaturbereich des Abgases (2) im Abgastrakt (5) eine Speicherung von Ammoniak in der Abgasnachbehandlungsanlage (7) erfolgt.

8. Brennkraftmaschine nach dem vorangehenden Anspruch, wobei die Motorsteuerung (12) dazu konfiguriert ist, die Abgasnachbehandlungsanlage (7) derart zu steuern, dass in einem zweiten Temperaturbereich des Abgases (2) im Abgastrakt (5), welcher höher gelegen ist als der erste Temperaturbereich, eine Konversion von NH₃, NOₓ und N₂O erfolgt.

9. Brennkraftmaschine nach wenigstens einem der vorangehenden Ansprüche, wobei die Abgasnachbehandlungsanlage (7) wenigstens eine Dosiervorrichtung (13, 14) zur Zudosierung eines Reduktionsmittels, insbesondere von Ammoniak oder eines Ammoniak-basierten Reduktionsmittels, in das Abgas (2) aufweist.

10. Genset, mit einer Brennkraftmaschine nach wenigstens einem der vorangehenden Ansprüche und wenigstens einem mechanisch der der Brennkraftmaschine gekoppelten elektrischen Generator zur Erzeugung elektrischer Energie.
